# EUROPEAN PATENT APPLICATION

(11) **EP 1 147 708 A2**
(43) Date of publication of application: **24.10.2001**
(21) Application number: 01500104.3
(22) Date of filing: 18.04.2001
(51) Int. Cl.: A23G 9/28

(54) **Automatic device for dispensing thick substances at medium and low temperatures**

(30) Priority: 18.04.2000 AR 0001804
(71) Applicant: Nicosia, Carlos Angel, San Justi Pcia de Buenos Aires (AR)
(72) Inventor: Nicosia, Carlos Angel, San Justi Pcia de Buenos Aires (AR)
(74) Representative: de Zunzunegui Redonet, Luis

(57) **Abstract**

This device consists of several cylindrical tubes, in an oblique position and corresponding to the various products available, to dispense, depending on the order, each individual tube containing in its interior a spiral stirrer, activated by an electric motor with reducer, on its upper end, also having a loading funnel with a spherical manual stopcock and alongside a electrically controlled valve to introduce pressurized air of between 1,000 and 1,600 grams in its interior, and it has an outlet tube on the lower end to dispense the products with a pneumatic impulse valve, which is computer controlled, corresponding to the quantity and flavour selection of the consumer's order.

## Description

The invention herein has, as an objective, an "AUTOMATIC DEVICE FOR DISPENSING THICK SUBSTANCES AT MEDIUM AND LOW TEMPERATURES".

This specifically refers to a special electromechanical apparatus, for the dispensing of thick products kept at low temperatures, such as a large variety of ice-creams and also yoghurt and cream cheeses, etc., which by an electronic command controls every action of the electromechanical device created for this purpose.

There is no knowledge of the existence of any same or similar references to be considered, which therefore allows the right to register this device.

Firstly, this device, in its individual specification is made up of a hermetic vaporising tubular cylinder which houses a spiral stirrer, driven by a shaft operated by an electrical motor with reducer, the upper end and the whole cylinder are arranged in a fixed oblique position and are, likewise, depending on the products in the interior and adjustments made, maintained at a temperature of 15° which is achieved by conventional refrigerating.

The refrigerating - stirring cylinder also has a funnel on its upper part, for introducing the product to be processed in the interior, with a spherical stopcock and in the same position alongside there is an electrically controlled valve installed for introducing pressurized air at between 1,000 and 1,600 grams per litre, which is kept in the cylinder interior, and is supplied from a dry (oil-free) compressor and controlled by a pressure regulator.

Once the product is introduced into the cylinder interior, it is subjected to a raising movement by the spiral and is then dispensed through the lower end, according to the consumer's order. It is computer controlled, causing it to pass through a pneumatic valve with limited opening time, depending on the container destined for the consumer, and a diaphragm which gives a cut-off signal.

The product introduced in the refrigerating cylinder interior could primarily be ice-cream and each flavour would have an individual cylinder such as strawberry cream, lemon, chocolate, etc., and other cylinders could be incorporated for yoghurt or cream cheese etc.

Then, according to the consumer's choice, a microprocessor activates an articulated arm which picks up the container and transfers it to each chosen product's cylinder outlet, to complete the order from the selection.

Thus explained the essential elements of this invention and their functions, the differences between this and other commonly known devices are made very clear and therefore confer its legal registering.

Other additional objects, aspects and advantages of this invention will be made more apparent with the numerical part of the specification and an example of the same is given.

In order to ensure greater clarity of the explanations regarding the nature of this invention, such as the way in which it should be operated, an example is given and is then described numerically, with the aid of drawings which are enclosed with the technical document.

Naturally, it must be understood that this practical embodiment is only given as an example and is not restrictive of the scope of the invention itself.

The reference numbering, which accompany the drawings correspond to the same parts.

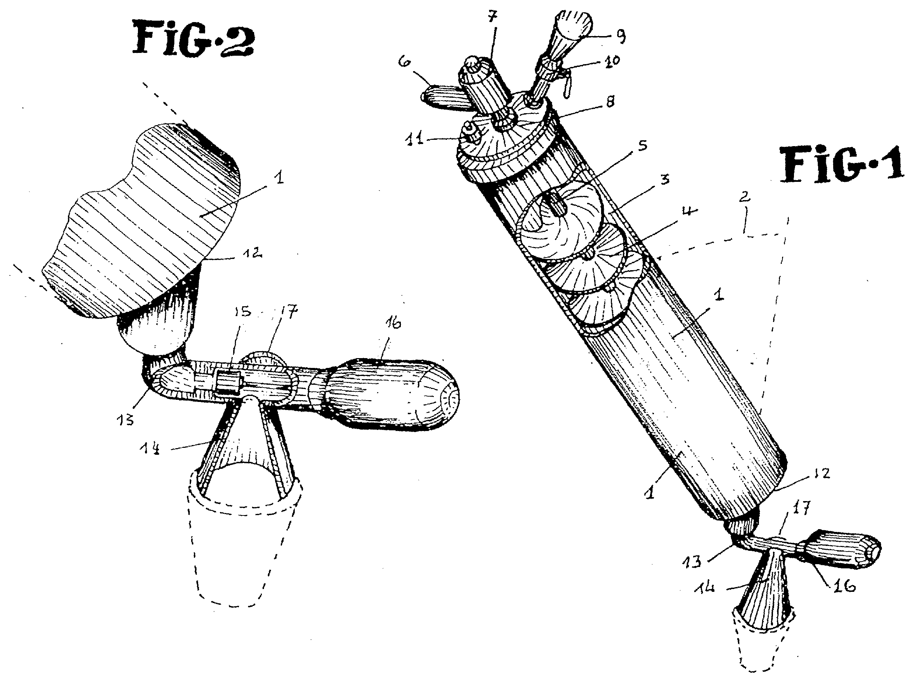

Figure 1) illustrates the refrigerating cylinder in perspective and section, clearly showing the components which form part of the operating function, for the dispensing of the product contained inside.
Figure 2) graphically illustrates, in section, the action of the outlet control valve, which leads to the container ordered by the consumer.

In this way and in accordance with the aforementioned, the essential parts of the invention are subsequently described, synthetically, in a tubular cylinder -1-, for refrigerating, with a special oblique position -2- housing in its interior -3- a spiral stirrer -4- with a shaft -5- activated by a motor -6and a reducer -7- on the upper end -8-.

On the aforementioned upper end -8- there is a loading funnel -9-, where the product is introduced into the interior -3-, after passing through a spherical manual stopcock -10-.

Also on the aforementioned upper end -8- through an electrically controlled valve -11- pressurized air between 1,000 and 1,600 grams is introduced in its interior -3- by means of a compressor (not illustrated) which is computer controlled.

On the lower end -12- of the cylinder -1- there is a outlet tube -13- leading to an evacuating funnel -14- whose dispensing position is controlled by a valve -15- which is activated by a pneumatic drive -16- directed by a computer which controls the mechanism. There is also a diaphragm -17- next to the outlet, which gives the cut-off signal to the mechanism's computer.

Whilst the invention is thus described and illustrated in ample detail in the technical specification herein, the basis of the invention is made very clear and at the same time the claim clauses are established which are subsequently included in the legal document herein.

## Claims

1. Automatic device for dispensing thick substances at medium and low temperatures, of conventional refrigeration type, **characterised by** having tubular cylinders, specially arranged in a fixed oblique position which in their interior axially house spirals for stirring the product activated by an electric motor with reducer, the aforementioned cylinder having on its upper end a loading funnel with a spherical manual stopcock, also having on the same upper end alongside an electrically controlled valve which allows the control of pressurized air of between 1,000 and 1,600 grams, being introduced into the interior from a compressor, having an outlet tube on the lower end of the cylinder, leading to an evacuating funnel controlled by a pneumatic impulse valve which operates by a computer signal, also having a diaphragm in the aforementioned outlet which signals the cut-off to the computer.
